# EUROPÄISCHE PATENTSCHRIFT

(11) **EP 1 697 206 B1**
(45) Veröffentlichungstag und Bekanntmachung des Hinweises auf die Patenterteilung: **19.03.2008**
(21) Anmeldenummer: 04765401.7
(22) Anmeldetag: 17.09.2004
(51) Int. Cl.: B62D 53/08

(54) **SATTELKUPPLUNG UND VERFAHREN ZUM HERSTELLEN EINER KUPPLUNGSPLATTE EINER SATTELKUPPLUNG**
FIFTH WHEEL, AND METHOD FOR THE PRODUCTION OF A COUPLING PLATE OF A FIFTH WHEEL
SELLETTE D'ATTELAGE ET PROCEDE DE PRODUCTION D'UNE PLAQUE D'ACCOUPLEMENT D'UNE SELLETTE D'ATTELAGE

(30) Priorität: 21.11.2003 DE 10355558
(43) Veröffentlichungstag der Anmeldung: 06.09.2006
(73) Patentinhaber: Hunger, Walter, D-97074 Würzburg (DE)
(72) Erfinder: Hunger, Walter, D-97074 Würzburg (DE)
(74) Vertreter: Witte, Alexander
(86) Internationale Anmeldenummer: PCT/EP2004/010511
(87) Internationale Veröffentlichungsnummer: WO 2005/051750

(56) Entgegenhaltungen:
- EP-A- 0 488 670
- CH-A- 585 122
- US-A1- 2003 047 906

## Beschreibung

Die vorliegende Erfindung betrifft eine Sattelkupplung zum Verbinden einer Zugmaschine mit einem Auflieger, wobei die Sattelkupplung eine einstückige Kupplungsplatte sowie mit der Kupplungsplatte verbindbare Lagerböcke aufweist, die an der Zugmaschine befestigbar sind, wobei die Kupplungsplatte eine obere Platte mit ebener Oberseite aufweist, an deren Unterseite Stege einstückig angeformt sind, ferner die Stege im Wesentlichen symmetrisch zu einer Längsachse der Kupplungsplatte verlaufen, und schließlich zwei erste Längsstege im Abstand von der Längsachse und parallel zueinander verlaufen.

Eine solche Sattelkupplung ist aus dem Dokument US 2003/0047906 A1 bekannt.

Sattelkupplungen dienen zum Verbinden eines Sattelauflieger-Anhängers mit einer Sattelzugmaschine, auch Sattelzugfahrzeug genannt. Die Sattelzugmaschine ist dabei mit dem sogenannten Sattel, d.h. einer Kupplungsplatte, verbunden, die im Wesentlichen hufeisenförmig ausgebildet ist. Die Oberseite der Kupplungsplatte bildet eine Auflagefläche für eine Gegenplatte, die an der Unterseite des vorderen Endes des Sattelauflieger-Anhängers angeordnet ist. Diese wird auch Aufliegerplatte genannt. Mittels eines dort vorgesehenen Königszapfens, der in die Aufnahme der Kupplungsplatte eingeführt und dort verriegelt wird, wird eine formschlüssige, jedoch drehbare Verbindung zwischen Zugmaschine und Anhänger erreicht.

Sattelkupplungen der vorstehenden Art sind allgemein bekannt und werden im großen Umfang standardmäßig bei Sattelzügen eingesetzt. Sie müssen mehreren Anforderungen genügen. Das Gewicht des Sattelanhängers, die Stütz- oder Flächenlast, sowie alle bei Kurven- und Bergfahrten auftretenden Zug- und Druckkräfte, die über den Königszapfen eingeleitet werden, müssen auf die Sattelzugmaschine übertragen werden. Kupplungsplatten, die gemäß dem Stand der Technik einteilig ausgeführt sind, müssen entsprechend massiv ausgebildet sein, damit sie die vorgenannten Kräfte aufnehmen können. Die Folge ist, dass für die Herstellung der Kupplungsplatte relativ viel Material benötigt wird und die Platte daher entsprechend schwer ist.

Das Dokument DE 198 13 635 A1 befasst sich mit dem Problem, eine Sattelkupplung so auszubilden, dass unter Reduzierung des Materialaufwandes das Gewicht der Kupplung deutlich verringert wird und ferner ein modularer Aufbau möglich ist.

Zur Lösung dieses Problems wird vorgeschlagen, die Kupplungsplatte aus zwei mechanisch miteinander verbindbaren separaten Komponenten zu bilden. Als erste Komponente wird ein oberes Auflagebauteil vorgeschlagen, das mit der Aufliegerplatte in Wechselwirkung tritt. Als zweite Komponente wird ein unteres Tragebauteil vorgeschlagen, an dem die zentrale Ausnehmung mit einem verriegelnden Schloss angebracht ist, und das über Lagerelemente, insbesondere in Form von Lagerzapfen, mit dem Rahmen der Sattelzugmaschine verbindbar ist.

Das untere balkenartige Tragebauteil überträgt im Wesentlichen die Kraft vom Königszapfen an die Lager und damit an die Sattelzugmaschine. Es nimmt daher die Stützlast und die vom Königszapfen eingeleiteten großen Kräfte auf, nämlich die Zugkräfte beim Fahren im ebenen und ansteigenden Gelände, die Druckkräfte im abfallenden Gelände sowie die Quer- und Abhebekräfte bei Kurvenfahrten. Somit muss nur dieses Tragebauteil entsprechend mechanisch stabil ausgebildet werden. Deshalb wird das untere balkenartige Tragebauteil aus Stahl hergestellt.

Das obere plattenartige Auflagebauteil muss allein die Flächenlast des Sattelanhängers tragen. Das Auflagebauteil ist mit dem Tragebauteil verschraubt. Durch die Trennung der Funktionen ergeben sich Freiheitsgrade in der Ausgestaltung des oberen Auflagebauteils. Das obere Auflagebauteil kann aus Aluminium hergestellt werden. Dadurch soll die angestrebte Gewichtsreduzierung erreicht werden.

Nachteil der bekannten Sattelkupplung ist, dass die angestrebte Gewichtsverminderung nur teilweise gelingt, weil das untere Tragebauteil unverändert aus Stahl hergestellt ist. Weiter ist ein erhöhter Konstruktions- und Montageaufwand erforderlich, um die aus zwei separaten Komponenten bestehende Kupplung zu montieren, wobei die dazu benötigten Verbindungsmittel die Festigkeit der Gesamtanordnung bestimmen.

Aus dem eingangs genannten Dokument US 2003/0047906 A1 ist eine Kupplungsplatte bekannt, die aus Aluminium oder aus Stahl hergestellt sein kann. Auf der Unterseite der Kupplungsplatte ist eine Mehrzahl von längs und quer verlaufenden Stegen vorgesehen, die der Aussteifung der Kupplungsplatte dienen.

Es ist daher eine Aufgabe der vorliegenden Erfindung, eine Kupplungsplatte zu schaffen, deren Gesamtgewicht noch weiter reduziert ist und bei der kein erhöhter Montageaufwand erforderlich ist.

Diese Aufgabe wird bei einer Sattelkupplung der eingangs erwähnten Art erfindungsgemäß dadurch gelöst, dass die Kupplungsplatte aus einer Aluminiumlegierung ausgebildet ist, die ersten Längsstege am einen Ende in einen umlaufenden Rand der Platte und am anderen Ende in einen ersten Quersteg auslaufen, dass die ersten Längsstege, der Rand und der erste Quersteg einen mittleren Einbauraum mit im Wesentlichen rechteckförmigem Grundriss umschließen, dass der Einbauraum mit einer zur Platte parallel angeordneten Deckplatte überdeckt ist, und dass die Deckplatte an den ersten Längsstegen befestigt ist.

Die Erfindung hat den Vorteil, dass einerseits eine Verstärkung auch im Randbereich geschaffen wird, andererseits bildet der Rand auch eine Begrenzung für Einbauräume auf der Unterseite der Kupplungsplatte, in denen Aggregate und Bauelemente geschützt untergebracht werden können. Der Rand und der erste Quersteg umschließen einen mittleren Einbauraum mit im Wesentlichen rechteckförmigem Grundriss, der vorzugsweise Verriegelungsarme sowie einen Hauptzylinder zum Betätigen der Verriegelungsarme aufnimmt.

Ferner können auch die Lagerböcke aus der Aluminiumlegierung ausgebildet sein.

Dadurch wird eine erhebliche Gewichtsreduzierung erreicht, wobei die Aluminiumlegierung den erheblichen wirkenden Kräften standhält. Infolge der Einstückigkeit der Kupplungsplatte ist auch kein erhöhter Montageaufwand erforderlich, und die Festigkeit wird ausschließlich durch die Konstruktion der Sattelkupplung bestimmt.

Wenn auch die Lagerböcke aus der Aluminiumlegierung hergestellt sind, kann eine weitere Gewichtsreduzierung erreicht werden.

Es ist bevorzugt, wenn die Aluminiumlegierung aus der Gruppe bestehend aus AlCu4TiMg oder AlCu4Ti oder AlSi7Mg0,6 ausgewählt ist. Hierbei handelt es sich um Aluminiumgusslegierungen, die eine Zugfestigkeit Rₘ von 350 bis 420 MPa haben. Die Dehngrenze R_{p0,2} beträgt 220 bis 300 MPa. Die Bruchdehnung A beträgt 7 bis 12 %. Die Dichte liegt bei ca. 2,7 g/cm³. Dadurch ergibt sich im Vergleich zu Gusseisen eine theoretische Gewichtsersparnis von bis zu 65 %.

Die Erfindung hat ferner hat den Vorteil, dass durch die Stege bzw. Rippen eine mechanische Verstärkung stattfindet, wobei durch die Anordnung und Dimensionierung der Stege eine Optimierung erreicht werden kann, beispielsweise durch eine Finite-Elemente-Berechnung.

Besonders bevorzugt ist, wenn die Stege im Wesentlichen die selbe Wandstärke aufweisen.

Diese Maßnahme hat den Vorteil, dass Materialanhäufungen vermieden werden, die zu einer ungleichförmigen Abkühlung führen würden. Wenn die einstückige Kupplungsplatte an jeder Stelle eine im Wesentlichen konstante Wandstärke aufweist, kühlen alle Bereiche der Kupplungsplatte einerseits mit gleicher Geschwindigkeit und andererseits, bei entsprechend geringer Wandstärke, auch schnell ab. Das wirkt sich spürbar positiv auf die Festigkeit der abgekühlten Platte aus.

Um eine hohe Festigkeit nach dem Abkühlen zu erreichen, weist der Rand vorzugsweise im Wesentlichen die selbe Wandstärke wie die Stege auf.

Bei Sattelkupplungen der hier interessierenden Art weist die Platte im Bereich des mittleren Einbauraumes eine Ausnehmung zum Einführen eines Königszapfens in die Sattelkupplung auf. Es ist daher bevorzugt, wenn der Einbauraum mit einer zur Platte parallel angeordneten Deckplatte überdeckt ist und die Deckplatte an den ersten Längsstegen befestigt ist.

Diese Maßnahme hat den Vorteil, dass durch die Deckplatte ein Zuggurt geschaffen wird, der eine erhebliche Verstärkung der Kupplungsplatte in diesem Bereich bewirkt.

Hierbei ist bevorzugt, wenn die ersten Längsstege mit Bohrungen versehen sind und die Deckplatte in den Bohrungen verschraubt ist.

Bei weiteren Ausführungsbeispielen der Erfindung ist der erste Quersteg über eine Mehrzahl von zweiten Längsstegen mit einem zweiten Quersteg verbunden, der zum ersten Quersteg parallel verläuft.

Diese Maßnahme hat den Vorteil, dass anstelle eines aus Festigkeitsgründen erforderlichen breiten Quersteges mit großer Wandstärke eine Konfiguration gleicher Festigkeit, jedoch mit jeweils verminderter Wandstärke geschaffen wird.

Bei einem weiteren Ausführungsbeispiel der Erfindung verbinden dritte Querstege den Rand mit den ersten Längsstegen, derart, dass durch die dritten Querstege, den Rand und die ersten Längsstege seitliche Einbauräume mit im Wesentlichen kreissektorförmigem Grundriss entstehen. Die seitlichen Einbauräume nehmen z.B. eine Handpumpe oder einen Anschluss für eine elektrische Pumpe bzw. einen Ventilblock zum Steuern des zeitlichen Ablaufs eines Schließ- und/oder eines Öffnungsvorganges der Sattelkupplung auf.

Ein anderes Ausführungsbeispiel der Erfindung zeichnet sich dadurch aus, dass die Platte am hinteren Ende der Kupplungsplatte in zwei Hörner übergeht, die zwischen sich ein Kupplungsmaul einschließen. Dabei gehen von den freien Enden des zweiten Quersteges vierte Querstege ab, die zum Rand führen und unterhalb des Überganges zwischen Platte und Hörnern angeordnet sind, und/oder es gehen von den freien Enden des zweiten Quersteges dritte Längsstege ab, die zum Rand führen und mittig unterhalb der Hörner angeordnet sind.

Diese Maßnahmen haben den Vorteil, dass die Kupplungsplatte auch im Bereich der Hörner verstärkt ist, die insbesondere beim Einkuppeln einer hohen mechanischen Beastung ausgesetzt sind.

Bei einer weiteren erfindungsgemäßen Sattelkupplung ist die Platte zum Befestigen der Lagerböcke mit Befestigungsbohrungen versehen, die beidseits der Längsachse angeordnet sind, wobei die Befestigungsbohrungen durch einen inneren Ringsteg gebildet werden, der über eine Mehrzahl von Radialstegen mit einem äußeren Ringsteg verbunden ist. Dabei ist vorzugsweise der äußere Ringsteg über fünfte Querstege mit einem der ersten Längsstege verbunden, und es weist insbesondere mindestens einer der fünften Querstege die gleiche Höhe wie der zugehörige erste Längssteg auf und läuft in einen kreissegmentförmigen Steg gleicher Höhe aus, der auf einem der Längsachse zu weisenden Bogen des äußeren Ringsteges ausgeformt ist.

Diese Maßnahme hat den Vorteil, dass eine mechanisch feste Anordnung zur Aufnahme der Lagerböcke der Sattelkupplung entsteht.

Dieser Vorteil wird in besonderem Maße dann erreicht, wenn ein sechster Quersteg vom äußeren Ringsteg zum Rand und/oder wenn ein siebter Quersteg vom äußeren Ringsteg zum freien Ende des zweiten Quersteges führt.

Bei der erfindungsgemäßen Sattelkupplung sind die Lagerböcke vorzugsweise gegen die Kupplungsplatte unter Zwischenschaltung einer Lagerbuchse verschraubt, die beispielsweise aus POM (Poly-Oxymethylen) besteht.

Diese Maßnahme hat den Vorteil, dass die Sattelkupplung mit einer gewissen Elastizität an der Zugmaschine befestigt ist.

Die Kupplungsplatte kann mittels eines Gießverfahrens, insbesondere eines Squeeze-Casting-Verfahrens, hergestellt werden. Dabei wird die Kupplungsplatte unmittelbar aus der Aluminiumlegierung gegossen.

Dies hat den Vorteil, dass bei der Herstellung Abgüsse mit größter Maßgenauigkeit hergestellt werden können. Die Herstellung von Fertigteilen ist möglich, da Bohrungen und Gewinde eingegossen werden können, und lediglich Grate und Eingüsse entfernt werden müssen. Im Vergleich zu einer spanenden Herstellung werden die Werkstoffeigenschaften verbessert, weil der Faserverlauf im Werkstoff erhalten bleibt. Die Werkstoffverarbeitung ist verlustarm, da die Rohteile den Fertigteilen in der endgültigen Form angenähert sind, was weniger Abfall zur Folge hat. Außerdem werden kürzere Fertigungszeiten gegenüber der spanenden Formgebung erreicht. Ferner können einbaufertige Teile mit hoher Oberflächengüte und kleinen Maßtoleranzen erreicht werden.

Gemäß einer bevorzugten Ausführungsform wird die Kupplungsplatte ferner mittels warmen Aushärtens hergestellt.

Ein Warmumformen erfolgt oberhalb der Rekristallisationstemperatur (Kristallneubildung). Durch eine Gefügeneubildung werden Spannungen im Werkstück vermindert. Mit steigender Temperatur nimmt die Festigkeit ab, Dehnung und Verformbarkeit nehmen zu, die erforderlichen Umformkräfte können kleiner gewählt werden.

Ferner ist es vorteilhaft, wenn die Kupplungsplatte so ausgebildet ist, dass sie Schrägen aufweist, die einen beim Herstellungsverfahren auftretenden Druck derart verteilen, dass die Anzahl von Lufteinschlüssen minimal ist.

Ausführungsbeispiele der Erfindung sind in den Zeichnungen dargestellt und werden in der nachfolgenden Beschreibung näher erläutert. Es zeigen:
- Fig. 1: eine perspektivische Darstellung eines ersten Ausführungsbeispiels einer erfindungsgemäßen Sattelkupplung;
- Fig. 2: ein Temperatur/Zeit-Diagramm, das verschiedene Fertigungstechniken unter Berücksichtigung des Formgebungsprozesses zeigt;
- Fig. 3a und 3b: eine schematische Darstellung zur Veranschaulichung des "direkten SqueezeCasting-Verfahrens";
- Fig. 4a und 4b: eine Darstellung wie Fig. 3 für das "indirekte Squeeze-Casting-Verfahren";
- Fig. 5a und 5b: eine Darstellung wie Fig. 3 für das "zweistufige Gießschmiedeverfahren";
- Fig. 6: eine Draufsicht auf ein zweites Ausführungsbeispiel einer erfindungsgemäßen Sattelkupplung;
- Fig. 7: eine perspektivische Draufsicht auf eine Kupplungsplatte der Sattelkupplung gemäß Fig. 6;
- Fig. 8: eine Ansicht von unten auf die Kupplungsplatte gemäß Fig. 7;
- Fig. 9: eine perspektivische Ansicht, von unten, auf die Kupplungsplatte gemäß Fig. 7;
- Fig. 10: eine weitere perspektivische Ansicht, von unten, auf die Kupplungsplatte gemäß Fig. 7, jedoch mit daran befestigten Montagefüßen; und
- Fig. 11: in etwas vergrößertem Maßstab eine Schnittdarstellung entlang der Linie XI-XI von Fig. 8.

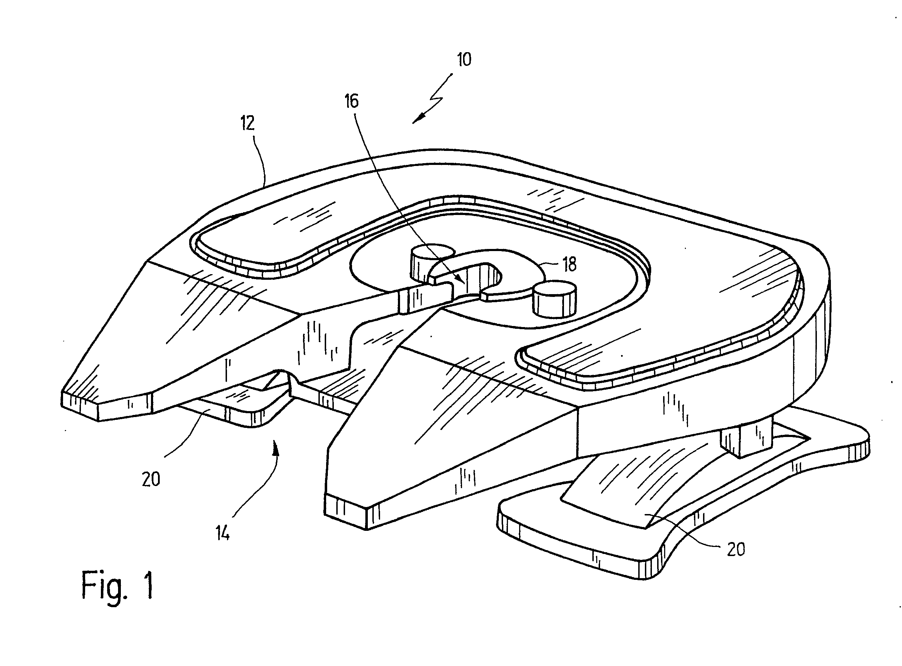

Die Fig. 1 zeigt eine Sattelkupplung 10, deren äußere Formgebung prinzipiell einer bekannten Sattelkupplung, z.B. gemäß der DE 44 18 533 entspricht. Die Sattelkupplung 10 dient zur gelenkigen Verbindung einer Zugmaschine mit einem Auflieger. Eine Kupplungsplatte 12 der Sattelkupplung 10 weist ein Kupplungsmaul 14 mit einer zentralen Ausnehmung 16 und einen zur Ausnehmung 16 konzentrischen Verschleißring 18 zur verriegelbaren Aufnahme eines am Auflieger inmitten einer Aufliegerplatte fest angebrachten Königszapfens mittels eines Schlosses auf. Die Kupplungsplatte 12 ist über Lagerbolzen mit Lagerböcken 20 verbunden. Diese sind fest und nicht verdrehbar an dem Rahmen der Zugmaschine befestigt.

Die Kupplungsplatte 12 der erfindungsgemäßen Sattelkupplung 10 besteht vollständig aus einer Aluminiumlegierung und besitzt dementsprechend ein sehr geringes Gewicht. Die Kupplungsplatte 12 wird mittels eines Gießschmiedeverfahrens gefertigt.

Fertigungsverfahren werden allgemein in sechs Hauptgruppen eingeteilt. Zwei dieser Hauptgruppen sind das Urformen und Umformen. Beim Urformen wird aus einem formlosen Stoff ein fester Körper mit einer bestimmten Form gefertigt. Dabei wird ein Zusammenhalt in einem geometrisch bestimmten, festen Körpern geschaffen, z.B. durch Pressen, Sintern, Gießen, etc. Beim Umformen werden die Masse und der Zusammenhalt eines Stoffes beibehalten. Die Form eines festen Körpers, z.B. eines Rohlings, wird durch plastisches bzw. bildsames Umformen verändert. Beispiele für Umformen sind Druckumformen, Zugdruckumformen, Biegeumformen, Schubumformen, etc.

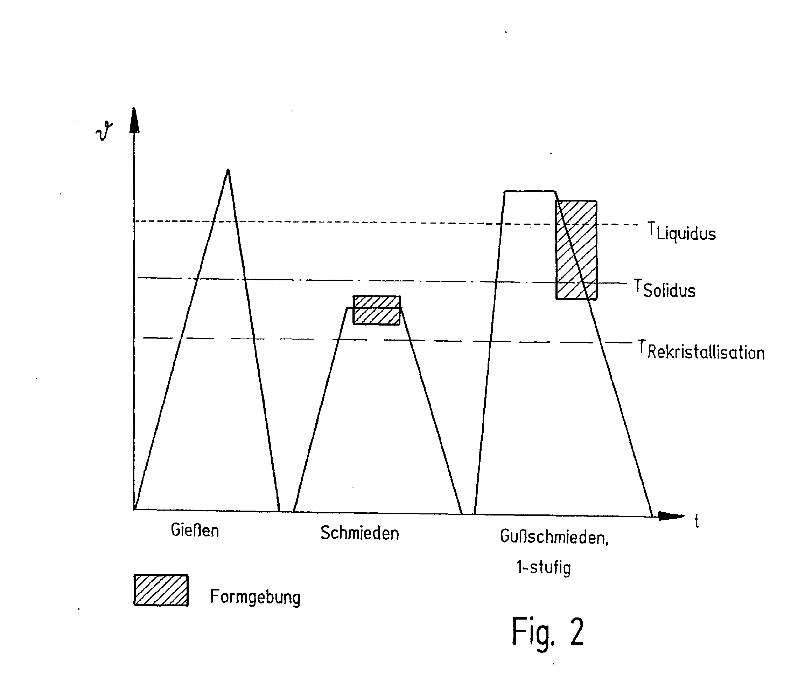

Im Spannungsfeld zwischen Gießen (Urformen) und Schmieden (Umformen) sind grundsätzlich die hohen erzielbaren Bauteilkomplexitäten bei den Gießtechniken sowie die hervorragenden Bauteileigenschaften von Schmiedeteilen vorteilhaft und werden bei der vorliegenden Erfindung durch eine Kombination der Einzeltechnologien genutzt und miteinander verknüpft. Bei der Zusammenfassung von Ur- und Umformtechnik zur Bauteilherstellung besteht u.a. die Möglichkeit, das Formgießen in Dauerformen mit einem während oder sich direkt an die Erstarrung anschließenden Umformschritt zu verbinden. In diesem Fall, in dem die Einzeltemperatur des Werkstoffs über der Liquidustemperatur liegt (vgl. Fig. 2), spricht man vom "Gießschmieden".

Vorteile des Schmiedens gegenüber spanender Formgebung sind u.a. eine höhere Festigkeit der Werkstücke, Werkstoffersparnisse auf Grund geringeren Abfalls, kurze Fertigungszeiten, eine rationelle Fertigung, gute Maßhaltigkeit und eine hohe Oberflächengüte.

Beim Formgießverfahren für die Aluminiumlegierung gemäß der Erfindung wird durch eine Druckbeaufschlagung eine Verbesserung der Formfüllung und eine Nachspeisung von Hohlstellen im Bauteil erzielt.

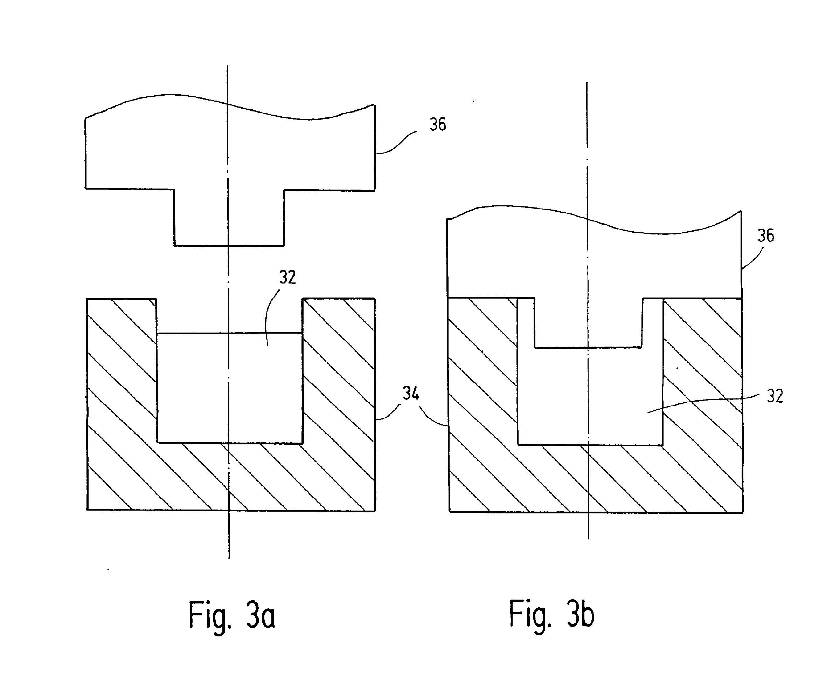

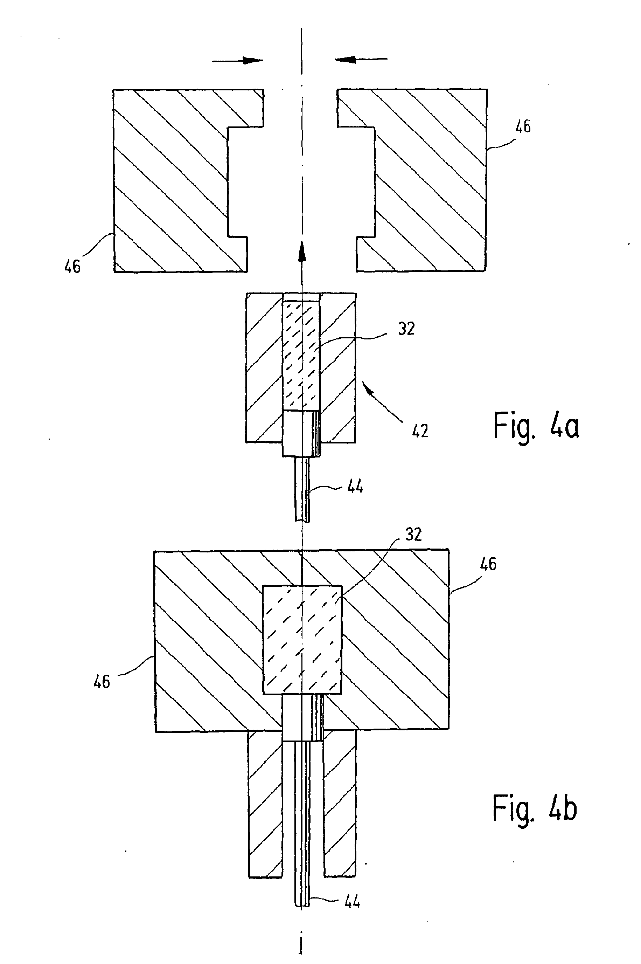

Ein besonders geeignetes Gießschmiedeverfahren zum Herstellen der erfindungsgemäßen Sattelkupplung 10 ist das sog. "Squeeze-Casting". Beim Squeeze-Casting unterscheidet man die Hauptvarianten "direktes" und "indirektes" Squeeze-Casting (vgl. Fig. 3 und 4).

Der Unterschied zwischen diesen beiden Varianten liegt darin, dass beim "direkten Squeeze-Casting" (vgl. Fig. 3a und 3b) eine Schmelze 32 direkt in eine abbildende Gussform 34 gegossen wird und die Gussform 34, die mehrteilig ausgeführt sein kann, durch einen Druckstempel 36 geschlossen und abgedichtet wird. Unter hohem Druck, bis zu 2800 bar, wird die neue Sattelkupplung 10 mit sehr geringem Porenanteil hergestellt. Die Metallschmelze wird direkt in ein Untergesenk eines horizontal geteilten Werkzeuges (Gussform) gefüllt und durch die sich schließende Form beim Einfahren des Obergesenks (Druckstempel) verdrängt. Während der Erstarrung wirkt ein Druck von mindestens 70 bar, der so lange aufrecht erhalten wird, bis die Solidustemperatur (vgl. Fig. 2) unterschritten ist.

Hierbei ist bevorzugt, dass die Erstarrungsgeschwindigkeit ausreichend kompensiert wird. Durch geeignete werkzeugtechnische Maßnahmen kann eine während oder im Anschluss an die Erstarrung durchgeführte Plastifizierung eine Umformung der Sattelkupplung 10 bewirken. Beim einstufigen Gießschmieden (vgl. Fig. 3a/b) finden der Gießschritt und die Umformung im gleichen Werkzeugsatz und zeitlich unmittelbar miteinander statt.

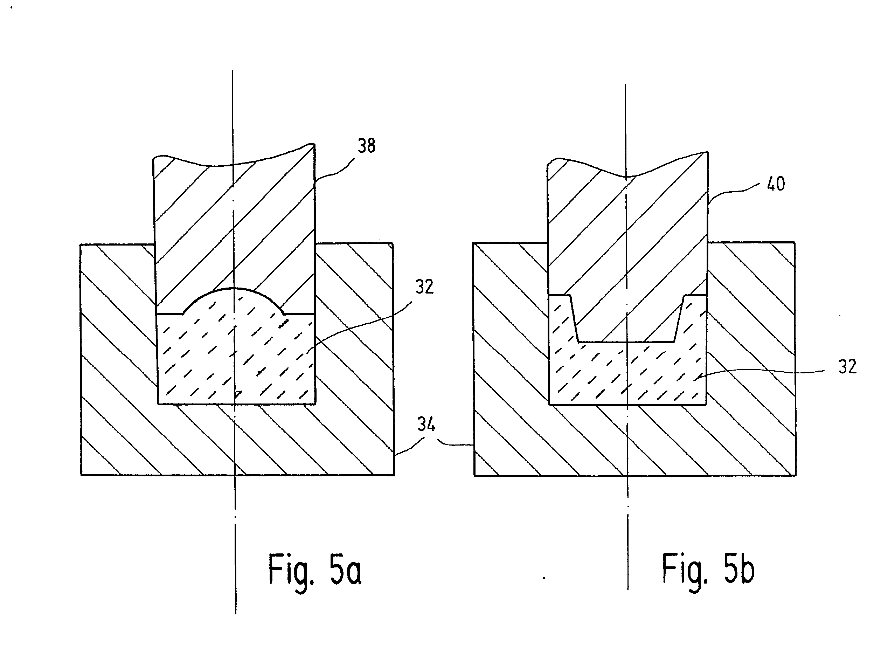

Beim zweistufigen Gießschmieden (vgl. Fig. 5a und 5b) wird die Umformung im Anschluss an die vollständige Erstarrung der vorgegossenen Sattelkupplung 10, aber noch unter Ausnutzung der Gießhitze durchgeführt. Durch einen schnellen Wechsel des Oberwerkzeugs 38 bzw. 40 wird die gusstechnisch erzeugte Vorform zu der Endgeometrie umgeformt.

Der große Vorteil, der sich beim zweistufigen Gieß schmieden trotz des höheren Werkzeugaufwands abzeichnet, liegt in der Möglichkeit der Verfahrensoptimierung. So kann die gießtechnisch erzeugte Vorform unter umformtechnischen Optimierungszielsetzungen mit modernen Rechenmethoden so gestaltet und erzeugt werden, dass der Umformschritt neben der geometrischen Realisierung der Endform noch andere Zielsetzungen erfüllt, wie z.B. Minimierung des eingesetzten Werkstoffvolumens, maximale Formgebungskraftbeschränkung, lokale Gefügestrukturen, bedingt durch lokale Formänderungsvorgaben und/oder Temperaturen, etc.

Beim "indirekten Squeeze-Casting" (vgl. Fig. 4a/b) wird die Schmelze 32 zuerst in einen Gießkolben 42 gefüllt, der durch einen verfahrbaren Kolben 44 die Schmelze 32 dann möglichst turbulenzarm in eine Gussform 46 presst. Die hochwertigen Bauteilqualitäten werden ebenfalls durch die Aufrechterhaltung des Gießdruckes bis zum Ende der Erstarrung erzielt.

Gerade die verschiedenen Squeeze-Casting-Varianten bieten verfahrenstechnisch günstige Möglichkeiten zur Verarbeitung der neuen Sattelkupplung 10 aus Aluminiumlegierungswerkstoffen, da die Druckanwendung eine innige Verbindung unterstützt.

Bei den hier beschriebenen Verfahren kann, wie oben bereits erwähnt, eine spezielle Aluminiumlegierung verwendet werden, nämlich AlCu₄TiMG. Diese Legierung wird unmittelbar zum Gießen der neuen Sattelkupplung 10 eingesetzt, d.h. die Legierung muss nicht zuvor in eine vorbestimmte Form gebracht werden, wie beim Schmieden. Bislang wurde diese Legierung im Sattelkupplungsbau ausschließlich in Form von Halbzeugen (Platten oder Ronden) gegossen, die dann spanend (aus dem Vollen) weiter bearbeitet wurden.

Beim warmen Aushärten des Körpers der Sattelkupplung 10 wird der erstarrte Körper in z.B. drei Stufen von z.B. 270°C auf 80°C abgekühlt, wobei der letzte Schritt zugleich dafür verwendet werden kann, einen Antifriktionsbelag aufzusintern.

Es versteht sich, dass die in den Fig. 3 bis 5 gezeigten Gussformen lediglich exemplarischer Natur sind. Die gezeigten Hohlformen entsprechen nicht der erfindungsgemäßen Sattelkupplung 10. Die dargestellten Formen können jedoch durch Gussformen ersetzt werden, mit denen eine erfindungsgemäße Sattelkupplung 10 gegossen bzw. geschmiedet werden kann.

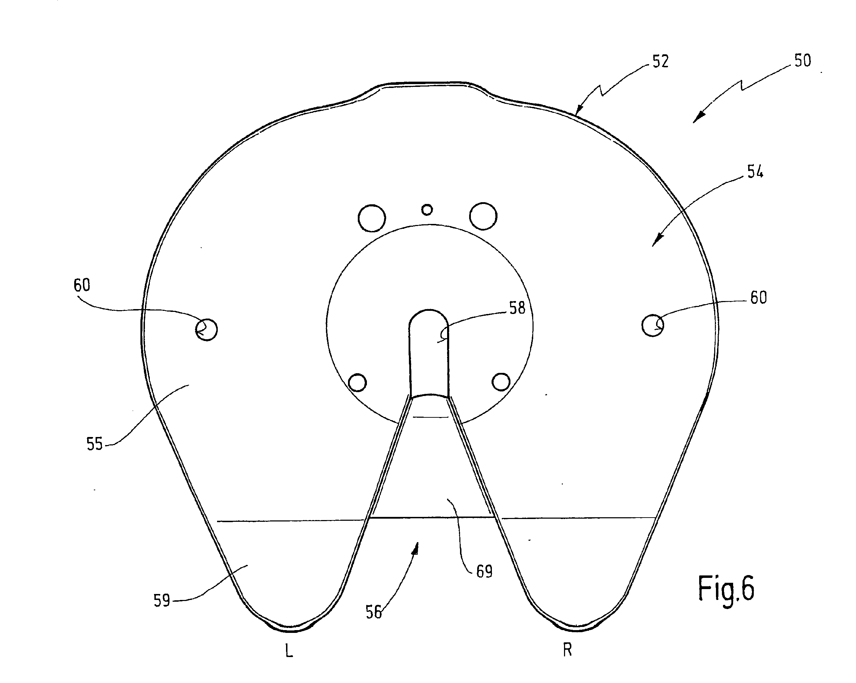

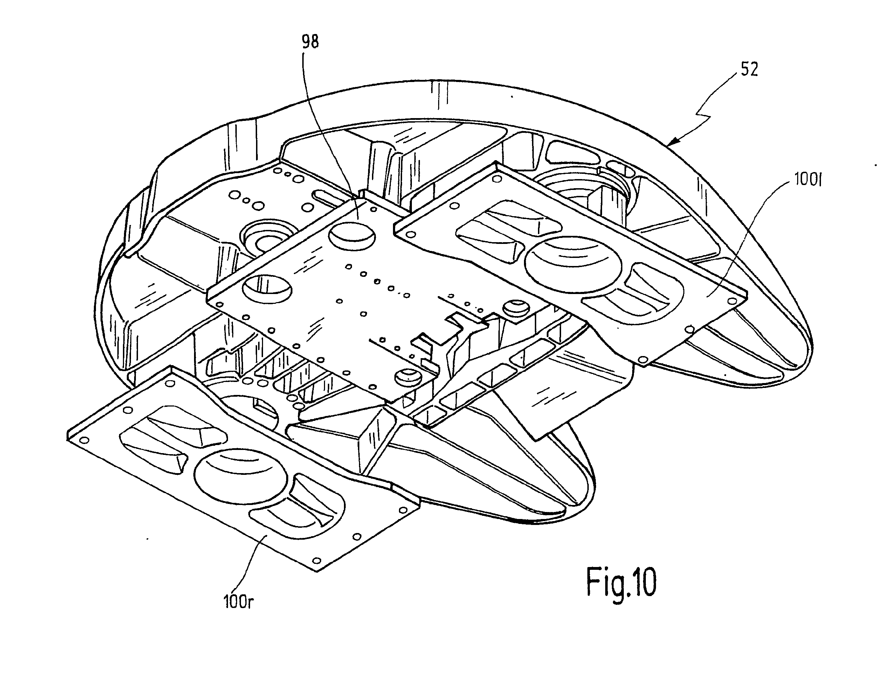

In den Fig. 6 bis 11 ist ein weiteres Ausführungsbeispiel einer erfindungsgemäßen Sattelkupplung 50 in Leicht- bzw. Aluminiumbauweise dargestellt.

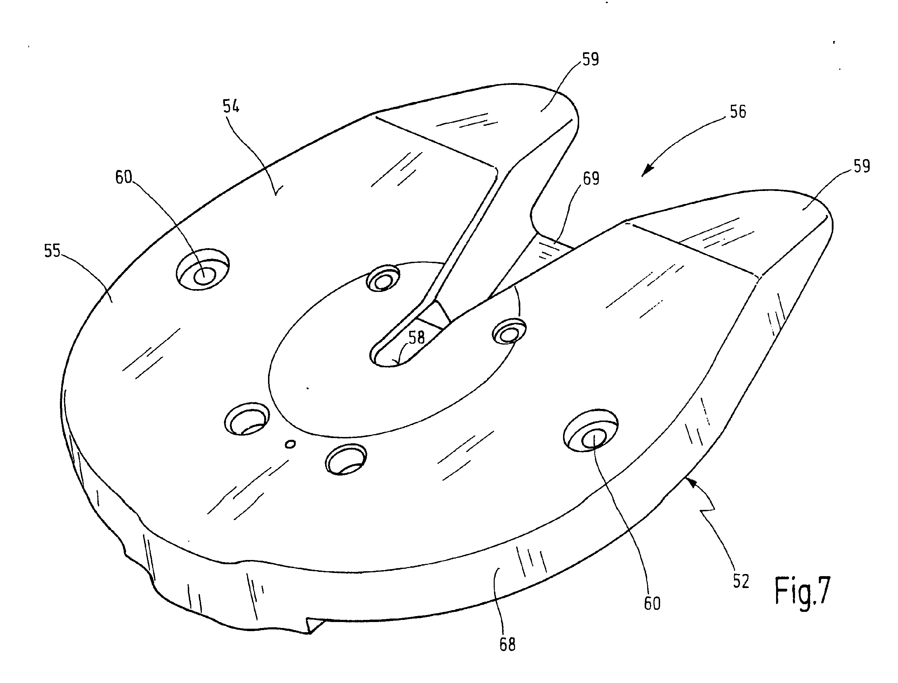

Die Fig. 6 und 7 zeigen die Sattelkupplung 50 bzw. deren Kupplungsplatte 52 von oben mit ihrer Oberseite 54, die durch eine einstückige Platte 55 gebildet wird. Auf der - in Fahrtrichtung gesehen - Rückseite ist ein Kupplungsmaul 56 zu erkennen und mittig eine Ausnehmung 58 für den Königszapfen. Das Kupplungsmaul befindet sich zwischen Hörnern 59. Ferner sind symmetrisch zur Mittelachse angeordnete Befestigungsbohrungen 60 zu erkennen, die dazu dienen, die Sattelkupplung auf einem Zugmaschine zu befestigen. Die in Fahrtrichtung gesehen linke Seite der Sattelkupplung 50 ist mit L und die rechte Seite mit R bezeichnet.

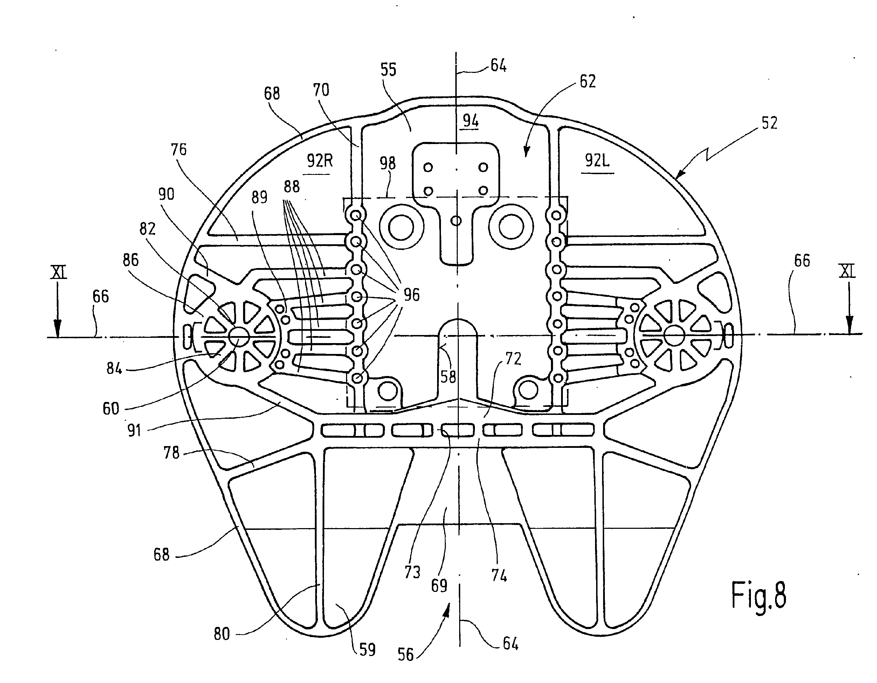

Die Fig. 8, 9 und 10 zeigen eine Unterseite 62 der einstückig aus Aluminium hergestellten Kupplungsplatte 52 mit einer für die Aluminium-Leichtbauweise optimierten Formgebung. Dabei ist zu berücksichtigen, dass es für die Festigkeit einer aus Aluminium gegossenen Kupplungsplatte wichtig ist, dass die Abkühlungsgeschwindigkeit der Schmelze so hoch und so gleichmäßig über das Volumen verteilt wie möglich ist. Aus diesem Grunde ist im Rahmen der vorliegenden Erfindung angestrebt worden, die Kupplungsplatte sowie die zu ihrer Verstärkung notwendigen Stege bzw. Rippen mit möglichst überall gleicher Wandstärke auszubilden. Materialhäufungen, die zu einer ungleichmäßigen und langsamen Abkühlung führen, sollten so weit als möglich vermieden werden.

Zur besseren Orientierung sind in Figur 8 eine Längsachse 64 sowie eine Querachse 66 eingezeichnet. Die Längsachse 64 entspricht dabei der Mittelachse der Kupplungsplatte 52. Die Kupplungsplatte 52 ist zur Längsachse symmetrisch aufgebaut.

Die Kupplungsplatte 52 wird an ihrem Umfang von einem umlaufenden, in Einbaulage senkrechten Rand 68 begrenzt. Der Rand 68 hat eine im wesentlichen konstante Höhe. Im Bereich des Kupplungsmauls 56 nimmt der Rand zum freien Ende der Hörner 59 hin jedoch ab. Er führt dann an den Innenseiten der Hörner mit wachsender Höhe wieder entlang und schließt sich über einen horizontalen Boden 69 am Grund des Kupplungsmauls 56.

Auf der Unterseite 62 der Kupplungsplatte 52 sind an die die Oberseite 54 bildende Platte 55 mehrere Stege oder Rippen einstückig angeformt, wie nachstehend erläutert werden wird. Diese Stege dienen einerseits zur mechanischem Aussteifung der Kupplungsplatte 52 und bilden andererseits Befestigungspunkte sowie Unterteilungen des Raumes auf der Unterseite 62, um dort diverse Aggregate und Bauelemente unterbringen zu können, wie ebenfalls noch erläutert werden wird. Wenn im Rahmen der vorliegenden Erfindung von "Querstegen" und von "Längsstegen" die Rede ist, so bedeutet dies nicht unbedingt, dass diese Stege jeweils streng parallel zur Querachse 66 bzw. zur Längsachse 64 verlaufen. Sie können vielmehr auch zu diesen Achsen geneigt sein.

Zwei zueinander beabstandete und parallele erste Längsstege 70 führen parallel zur Längsachse 64 vom vorderen Rand 68 zu einem ersten Quersteg 72. Der erste Quersteg 72 steht über eine Mehrzahl von kurzen zweiten Längsstegen 73 mit einem zu ihm parallelen zweiten Quersteg 74 in Verbindung. Die Querstege 72 und 74 stehen in Querrichtung über die ersten Längsstege 70 über.

Auf etwa einem Drittel der Länge der ersten Längsstege 70 führen dritte Querstege 76 von den ersten Längsstegen 70 zum Rand 68.

Von den seitlichen Enden des zweiten Quersteges 74 führen vierte Querstege 78 zum Rand 68.

Dritte Längsstege 80 verbinden die seitlichen Enden des zweiten Quersteges 74 mit den freien Enden der Hörner 59.

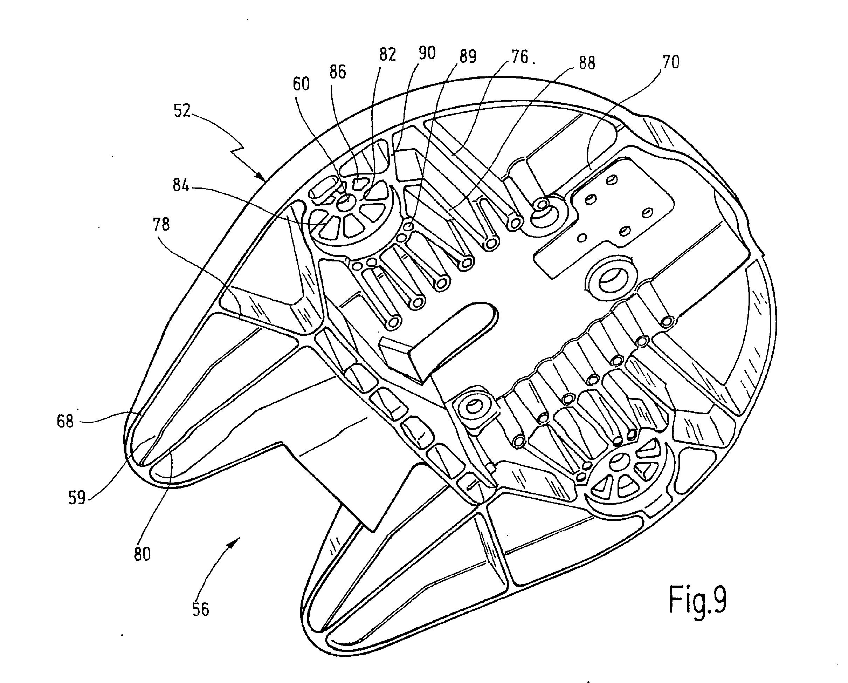

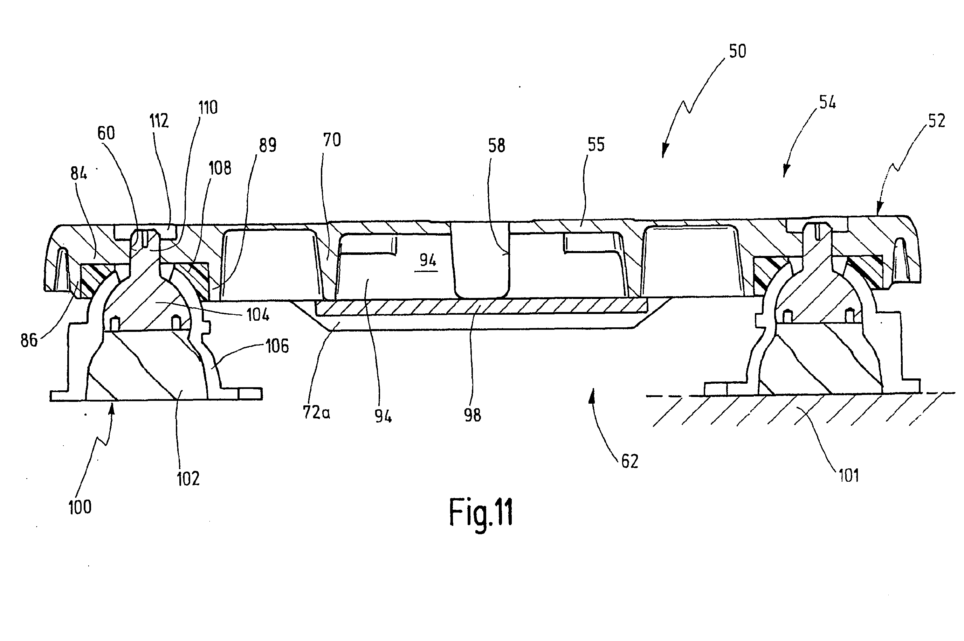

Um die Befestigungsbohrungen 60 herum ist jeweils ein innerer Ringsteg 82 ausgebildet, dessen Höhe, wie man deutlich aus Fig. 9 und 11 erkennen kann, wesentlich geringer ist als die der Stege 70 bis 80, deren Höhe im wesentlichen der des Randes 68 entspricht. Von dem inneren Ringsteg 82 führen gleich hohe Radialstege 84 zu einem ebenfalls gleich hohen äußeren Ringsteg 86.

Von den ersten Längsstegen 70 ist eine Mehrzahl von fünften Querstegen 88 zu dem äußeren Ringsteg 86 geführt. Im dargestellten Ausführungsbeispiel sind fünf derartige fünfte Querstege 88 vorgesehen. Diese münden jeweils im wesentlichen radial in einen äußeren Ringsteg 86 ein. Der in Figur 8 oberste fünfte Quersteg 88 vermindert sich dabei in seiner Höhe von der Höhe der ersten Längsstege 70 auf die Höhe des äußeren Ringsteges 86. Die in Figur 8 darunter angeordneten vier fünften Querstege 88 laufen in einem kreissegmentförmigen Steg 98 gleicher Höhe wie die ersten Längsstege 70 aus. Der kreissegmentförmige Steg 89 umgibt den äußeren Ringsteg 86 auf der in Fig. 8 inneren Seite auf etwa 90° von dessen Umfang.

Sechste Querstege 90 führen von der in Fig. 8 oberen Seite des äußeren Ringsteges 86 zum Rand 68.

Siebte Querstege 91 verbinden die freien Enden des dritten Längssteges 74 mit dem Rand 68.

Die Stege 70 bis 91 sind sämtlich einstückig mit der Platte 55 ausgebildet. Sie unterteilen die Unterseite 62 der Kupplungsplatte 52 in diverse Räume. Die ersten Längsstege 70 bilden mit den dritten Querstegen 76 und dem Rand 68 einen linken bzw. einen rechten Einbauraum 92R, 92L. Die Einbauräume 92R und 92L haben einen im wesentlichen kreissektorförmigen Grundriss, weil der Rand 68 in diesem Bereich wie ein Kreisbogen verläuft und die Stege 70 und 76, die die Einbauräume 92R, 92L begrenzen, im wesentlichen gleich lang sind.

Der rechte Einbauraum 92R dient z.B. zur Aufnahme einer Handpumpe oder eines Anschlusses einer elektrischen Pumpe, die zum Öffnen des Sattelschlosses verwendet wird. Der linke Einbauraum 92L nimmt z.B. einen Ventilblock auf, der zeitlichen die Abläufe beim Öffnen und Schließen der Sattelkupplung steuert. Die ersten Längsstege 70, der erste Quersteg 72 sowie der Rand 68 bilden einen mittleren Einbauraum 94 mit im wesentlichen rechteckförmigem Grund riss. Der mittlere Einbauraum 94 dient bevorzugt zur Aufnahme des Hauptzylinders und der Verriegelungsarme des Sattelschlosses.

Aus Fig. 8 und 9 erkennt man deutlich, dass in den ersten Längsstegen 70 jeweils mehrere Bohrungen 96, im dargestellten Ausführungsbeispiel sieben derartige Bohrungen 96, angebracht sind. Sechs dieser sieben Bohrungen 96 befinden sich an den Positionen der ersten Längsstege 70, an denen die Querstege 76, 88 von diesen abgehen. Dadurch wird der an diesen Stellen unvermeidbare Verdickungsbereich bzw. die dort vorhandene Materialansammlung zum Anbringen der Bohrungen 96 ausgenutzt.

Die Bohrungen 96 dienen zum Anschrauben einer Deckplatte 98, die den mittleren Einbauraum 94 im wesentlichen überdeckt. Die Deckplatte 98 besteht aus Stahl. Sie hat mechanisch die Funktion eines unteren Zuggurtes und versteift die Kupplungsplatte 52 auch im Hinblick auf die in der Platte 55 vorhandene Ausnehmung 58, die eine Schwächung der Struktur darstellt.

Fig. 11 zeigt einen Schnitt entlang der Querachse 66, d.h. entlang der Linie XI-XI von Fig. 8. Man erkennt dort wieder deutlich die oben erläuterte Deckplatte 98, die von unten an den ersten Längsstegen 70 befestigt ist und den mittleren Einbauraum 94 überspannt.

Fig. 11 zeigt auch Einzelheiten von Lagerböcken 100, mit denen die Sattelkupplung 50 mit einer bei 101 angedeuteten Tragekonstruktion einer Zugmaschine verbunden ist. Die Lagerböcke 100 weisen ein Unterteil 102 auf, das an seiner Oberseite mit einem Kugelstück 104 verbunden ist. Das Kugelstück 104 ist von einem Gehäuse 106 umgeben. Das Gehäuse 106 liegt mit seiner kugeligen Oberfläche an einer Lagerbuchse 108 an. Die Lagerbuchse 108 befindet sich in dem Raum, der in der Darstellung von Figur 11 oben durch die Radialstege 84 und seitlich von dem äußeren Ringsteg 86 sowie dem kreissegmentförmigen Steg 89 begrenzt ist. Die Lagerbuchse besteht aus einem Kunststoff, beispielsweise aus POM (Poly-Oxymetylen).

Ein Gewindeabschnitt 110 ragt durch die Bohrung 60 und ist von der Oberseite 54 der Kupplungsplatte 52 her mittels einer Mutter 112 gesichert.

## Patentansprüche

1. Sattelkupplung (10; 50) zum Verbinden einer Zugmaschine mit einem Auflieger, wobei die Sattelkupplung (10; 50) eine einstückige Kupplungsplatte (12; 52) sowie mit der Kupplungsplatte (12; 52) verbindbare Lagerböcke (20; 100) aufweist, die an der Zugmaschine befestigbar sind, wobei die Kupplungsplatte (52) eine obere Platte (55) mit ebener Oberseite (54) aufweist, an deren Unterseite (62) Stege (70 - 91) einstückig angeformt sind, ferner die Stege (70 - 91) im Wesentlichen symmetrisch zu einer Längsachse (64) der Kupplungsplatte (52) verlaufen, und schließlich zwei erste Längsstege (70) im Abstand von der Längsachse (64) und parallel zueinander verlaufen, **dadurch gekennzeichnet, dass** die Kupplungsplatte (12; 52) aus einer Aluminiumlegierung ausgebildet ist, dass die ersten Längsstege (70) am einen Ende in einen umlaufenden Rand (68) der Platte (55) und am anderen Ende in einen ersten Quersteg (72) auslaufen, dass die ersten Längsstege (70), der Rand (68) und der erste Quersteg (72) einen mittleren Einbauraum (94) mit im Wesentlichen rechteckförmigem Grundriss umschließen, dass der Einbauraum (94) mit einer zur Platte (55) parallel angeordneten Deckplatte (98) überdeckt ist, und dass die Deckplatte (98) an den ersten Längsstegen (70) befestigt ist.

2. Sattelkupplung nach Anspruch 1, **dadurch gekennzeichnet, dass** die ersten Längsstege (79) mit Bohrungen (96) versehen sind, und dass die Deckplatte (98) in den Bohrungen verschraubt ist.

3. Sattelkupplung nach Anspruch 1 oder 2, **dadurch gekennzeichnet, dass** ferner die Lagerböcke (20) aus der Aluminiumlegierung ausgebildet sind.

4. Sattelkupplung nach einem oder mehreren der Ansprüche 1 bis 3, **dadurch gekennzeichnet, dass** die Aluminiumlegierung aus der Gruppe bestehend aus AlCu4TiMg oder AlCu4Ti oder AlSi7Mg0,6 ausgewählt ist.

5. Sattelkupplung nach einem oder mehreren der Ansprüche 1 bis 4, **dadurch gekennzeichnet, dass** sie mittels eines Gießschmiedeverfahrens hergestellt ist.

6. Sattelkupplung nach Anspruch 5, **dadurch gekennzeichnet, dass** das Gießschmiedeverfahren ein Squeeze-Casting-Verfahren ist.

7. Sattelkupplung nach einem der vorherigen Ansprüche, **dadurch gekennzeichnet, dass** sie unmittelbar aus der Aluminiumlegierung gegossen ist.

8. Sattelkupplung nach einem oder mehreren der Ansprüche 1 bis 7, **dadurch gekennzeichnet, dass** die Kupplungsplatte (12) ferner mittels warmen Aushärtens hergestellt ist.

9. Sattelkupplung nach Anspruch 5 oder 6, **dadurch gekennzeichnet, dass** die Kupplungsplatte (12) so ausgebildet ist, dass sie Schrägen aufweist, die einen beim Herstellungsverfahren auftretenden Druck derart verteilen, dass die Anzahl von Lufteinschlüssen minimal ist.

10. Sattelkupplung nach einem oder mehreren der Ansprüche 1 bis 9, **dadurch gekennzeichnet, dass** die Stege (70 - 91) im Wesentlichen die selbe Wandstärke aufweisen.

11. Sattelkupplung nach einem oder mehreren der Ansprüche 1 bis 10, **dadurch gekennzeichnet, dass** an die Unterseite (62) ferner ein an der Platte (55) umlaufender Rand (68) angeformt ist.

12. Sattelkupplung nach Anspruch 10 und 11, **dadurch gekennzeichnet, dass** der Rand (68) im Wesentlichen die selbe Wandstärke wie die Stege (70 - 91) aufweist.

13. Sattelkupplung nach einem oder mehreren der Ansprüche 1 bis 12, **dadurch gekennzeichnet, dass** der mittlere Einbauraum (94) Verriegelungsarme sowie einen Hauptzylinder zum Betätigen der Verriegelungsarme aufnimmt.

14. Sattelkupplung nach einem oder mehreren der Ansprüche 1 bis 13, **dadurch gekennzeichnet, dass** die Platte (55) im Bereich des mittleren Einbauraumes (94) eine Ausnehmung (58) zum Einführen eines Königszapfens in die Sattelkupplung (50) aufweist.

15. Sattelkupplung nach einem oder mehreren der Ansprüche 1 bis 14, **dadurch gekennzeichnet, dass** der erste Quersteg (72) über eine Mehrzahl von zweiten Längsstegen (73) mit einem zweiten Quersteg (74) verbunden ist, der zum ersten Quersteg (74) parallel verläuft.

16. Sattelkupplung nach einem oder mehreren der Ansprüche 1 bis 15, **dadurch gekennzeichnet, dass** dritte Querstege (76) den Rand (68) mit den ersten Längsstegen (70) verbinden, derart, dass durch die dritten Querstege (76), den Rand (68) und die ersten Längsstege (70) seitliche Einbauräume (92R, 92L) mit im Wesentlichen kreissektorförmigem Grundriss entstehen.

17. Sattelkupplung nach Anspruch 16, **dadurch gekennzeichnet, dass** die seitlichen Einbauräume (92R, 92L) eine Handpumpe oder einen Anschluss für eine elektrische Pumpe bzw. einen Ventilblock zum Steuern des zeitlichen Ablaufs eines Schließ- und/oder eines Öffnungsvorganges der Sattelkupplung aufnehmen.

18. Sattelkupplung nach einem oder mehreren der Ansprüche 15 bis 17, **dadurch gekennzeichnet, dass** die Platte (55) am hinteren Ende der Kupplungsplatte (52) in zwei Hörner (59) übergeht, die zwischen sich ein Kupplungsmaul (56) einschließen, und dass von den freien Enden des zweiten Quersteges (74) vierte Querstege (78) abgehen, die zum Rand (68) führen und unterhalb des Überganges zwischen Platte (55) und Hörnern (59) angeordnet sind.

19. Sattelkupplung nach einem oder mehreren der Ansprüche 15 bis 18, **dadurch gekennzeichnet, dass** die Platte (55) am hinteren Ende der Kupplungsplatte (52) in zwei Hörner (59) übergeht, die zwischen sich ein Kupplungsmaul (56) einschließen, und dass von den freien Enden des zweiten Quersteges (74) dritte Längsstege (80) abgehen, die zum Rand (68) führen und mittig unterhalb der Hörner (59) angeordnet sind.

20. Sattelkupplung nach einem oder mehreren der Ansprüche 1 bis 19, **dadurch gekennzeichnet, dass** die Platte (55) zum Befestigen der Lagerböcke (100) mit Befestigungsbohrungen (60) versehen ist, die beidseits der Längsachse (64) angeordnet sind, und dass die Befestigungsbohrungen (60) durch einen inneren Ringsteg (82) gebildet werden, der über eine Mehrzahl von Radialstegen (84) mit einem äußeren Ringsteg (86) verbunden ist.

21. Sattelkupplung nach Anspruch 20, **dadurch gekennzeichnet, dass** der äußere Ringsteg (86) über fünfte Querstege (88) mit einem der ersten Längsstege (70) verbunden ist.

22. Sattelkupplung nach Anspruch 21, **dadurch gekennzeichnet, dass** mindestens einer der fünften Querstege (88) die gleiche Höhe wie der zugehörige erste Längssteg (70) aufweist und in einen kreissegmentförmigen Steg (89) gleicher Höhe ausläuft, der auf einem der Längsachse (64) zu weisenden Bogen des äußeren Ringsteges (86) ausgeformt ist.

23. Sattelkupplung nach einem oder mehreren der Ansprüche 20 bis 22, **dadurch gekennzeichnet, dass** ein sechster Quersteg (90) vom äußeren Ringsteg (82) zum Rand (68) führt.

24. Sattelkupplung nach Anspruch 17 und einem oder mehreren der Ansprüche 20 bis 23, **dadurch gekennzeichnet, dass** ein siebter Quersteg (91) vom äußeren Ringsteg (82) zum freien Ende des zweiten Quersteges (74) führt.

25. Sattelkupplung nach einem oder mehreren der Ansprüche 1 bis 24, **dadurch gekennzeichnet, dass** die Lagerböcke (100) gegen die Kupplungsplatte (52) unter Zwischenschaltung einer Lagerbuchse (108) verschraubt sind.

26. Sattelkupplung nach Anspruch 25, **dadurch gekennzeichnet, dass** die Lagerbuchse aus POM (Poly-Oxymethylen) besteht.

## Claims

1. A fifth wheel coupling (10; 50) for connecting a tractor with a semi-trailer, wherein the fifth wheel coupling (10; 50) comprises a one-piece coupling plate (12; 52) as well as bearing brackets (20; 100) adapted to be connected to the coupling plate (12; 52), the bearing brackets (20; 100) being adapted to be mounted to the tractor, wherein the coupling plate (52) has an upper plate (55) with a plane surface (54), ridges (70-91) being integrally molded to an underside (62) of the upper plate (55), the ridges (70-91), moreover, extending essentially symmetrical to a longitudinal axis (64) of the coupling plate (52), and, finally, two first longitudinal ridges (70) extending at a distance from the longitudinal axis (64) and parallel relative to one another, **characterized in that** the coupling plate (12; 52) is configured from an aluminium alloy, that the first longitudinal ridges (70) are terminated at one end thereof by a circumferential rim (68) of the plate (55) and at the other end by a first transversal ridge (72), that the first longitudinal ridges (70), the rim (68) and the first transversal ridge (72) surround a central mounting space (94) having an essentially rectangular outline, that the mounting space (94) is covered by a cover plate (98) arranged parallel to the plate (55), and that the cover plate (98) is attached to the longitudinal ridges (70).

2. The fifth wheel coupling of claim 1, **characterized in that** the first longitudinal ridges (79) are provided with bores (96), and that the cover plate (98) is bolted in the bores (96).

3. The fifth wheel coupling of claim 1 or 2, **characterized in that**, moreover, the bearing brackets (20) are configured from the aluminium alloy.

4. The fifth wheel coupling of one or more of claims 1 to 3, **characterized in that** the aluminium alloy is selected from the group consisting of AlCu4TiMg or AlCu4Ti or AlSi7Mg0,6.

5. The fifth wheel coupling of one or more of claims 1 to 4, **characterized in that** it is manufactured by means of a cast-forging process.

6. The fifth wheel coupling of claim 5, **characterized in that** the mold-forging process is a squeeze-casting process.

7. The fifth wheel coupling of any of the preceding claims, **characterized in that** it is directly casted from the aluminium alloy.

8. The fifth wheel coupling of one or more of claims 1 to 7, **characterized in that** the coupling plate (12) is, moreover, manufactured by warm hardening.

9. The fifth wheel coupling of claims 5 or 6, **characterized in that** the coupling plate (12) is configured such that it comprises chamfered portions for distributing the pressure developing during the manufacturing process such that the number of air occlusions is minimized.

10. The fifth wheel coupling of one or more of claims 1 to 9, **characterized in that** the ridges (70-91) have essentially the same wall thickness.

11. The fifth wheel coupling of one or more of claims 1 to 10, **characterized in that** a rim (68) surrounding the plate (55) is molded to the underside (62).

12. The fifth wheel coupling of claims 10 and 11, **characterized in that** the rim (68) has essentially the same wall thickness as the ridges (70-91).

13. The fifth wheel coupling of one or more of claims 1 to 12, **characterized in that** the central mounting space (94) is provided with latching arms and with a main cylinder for operating the latching arms.

14. The fifth wheel coupling of one or more of claims 1 to 13, **characterized in that** the plate (55) in the area of the central mounting space (94) is provided with a recess (58) for inserting a king pin into the fifth wheel coupling (50).

15. The fifth wheel coupling of one or more of claims 1 to 14, **characterized in that** the first transversal ridge (72) is connected to a second transversal ridge (74) via a plurality of second longitudinal ridges (70), the second transversal ridge (74) extending parallel to the first transversal ridge (72).

16. The fifth wheel coupling of one or more of claims 1 to 15, **characterized in that** third transversal ridges (76) connect the rim (68) with the first longitudinal ridges (70), such that lateral mounting spaces (92R, 92L) having an essentially sector shaped outline are generated by the third transversal ridges (76), the rim (68) and the first longitudinal ridges (70).

17. The fifth wheel coupling of claim 16, **characterized in that** the lateral mounting spaces (92R, 92L) receive a manually operated pump or a connector for an electric pump or for a valve block for controlling the sequence of a closing and/or an opening operation of the fifth wheel coupling., resp.

18. The fifth wheel coupling of one or more of claims 15 to 17, **characterized in that** the plate (55) at the rear end of the coupling plate (52) has a transition into two horns (59) enclosing between them a coupling jaws (56), and that fourth transversal ridges (78) extend from the free ends of the second transversal ridge (74), the fourth transversal ridges (78) leading to the rim (68) and being arranged below the transition between the plate (55) and the horns (59).

19. The fifth wheel coupling of one or more of claims 15 to 18, **characterized in that** the plate (55) at the rear end of the coupling plate (52) has a transition into two horns (59) enclosing between them a coupling jaws (56), and that third longitudinal ridges (80) extend from the free ends of the second transversal ridge (74), the third longitudinal ridges (80) leading to the rim (68) and being arranged centrally below the horns (59).

20. The fifth wheel coupling of one or more of claims 1 to 19, **characterized in that** the plate (55) is provided with fastening bores (60) for fastening the bearing brackets (100), the fastening bores (60) being arranged on both sides of the longitudinal axis (64), and that the fastening bores (60) are configured by an inner ring ridge (82) being connected to an outer ring ridge (86) via a plurality of radial ridges (84).

21. The fifth wheel coupling of claim 20, **characterized in that** the outer ring ridge (86) is connected to one of the first longitudinal ridges (70) via fifth transversal ridges (88).

22. The fifth wheel coupling of claim 21, **characterized in that** at least one of the fifth transversal ridges (88) has the same height as the corresponding first longitudinal ridge (70) and terminates into a circular segment shaped ridge (89) of same height being molded on an arc of the outer ring ridge (86) oriented towards the longitudinal axis (64).

23. The fifth wheel coupling of one or more of claims 20 to 22, **characterized in that** a sixth transversal ridge (90) leads from the outer ring ridge (82) to the rim (68).

24. The fifth wheel coupling of claim 17 and one or more of claims 20 to 23, **characterized in that** a seventh transversal ridge (91) leads from the outer ring ridge (82) to the free end of the second transversal ridge (74).

25. The fifth wheel coupling of one or more of claims 1 to 24, **characterized in that** the bearing brackets (100) are bolted against the coupling plate (52) via a bearing sleeve (108).

26. The fifth wheel coupling of claim 25, **characterized in that** the bearing sleeve consists of POM (Poly-Oxymethylen).

## Revendications

1. Sellette d'attelage (10 ; 50) pour relier un véhicule tracteur à une remorque, la sellette d'attelage (10 ; 50) présentant une plaque d'attelage (12 ; 52) monobloc, ainsi que des supports de palier (20 ; 100), pouvant être reliés avec les plaques d'attelage (12 ; 52), qui peuvent être fixés sur le véhicule tracteur, la plaque d'attelage (52) présentant une plaque supérieure (55) comportant une face supérieure plane (54), au niveau de la face inférieure (62) de laquelle des étais (70 à 91) sont moulés de manière monobloc, les étais (70 à 91) étant en outre essentiellement symétriques par rapport à un axe longitudinal (64) de la plaque d'attelage (52), et enfin deux premiers étais longitudinaux (70) étant parallèles l'un à l'autre à distance de l'axe longitudinal (64), **caractérisée en ce que** la plaque d'attelage (12 ; 52) est constituée d'un alliage d'aluminium, les premiers étais longitudinaux (70) aboutissent au niveau d'une extrémité dans une bordure circulaire (68) de la plaque (55) et au niveau de l'autre extrémité dans un premier étai transversal (72), les premiers étais longitudinaux (70), la bordure (68) et le premier étai transversal (72) encerclent un espace de mise en place médian (94) avec un plan horizontal essentiellement rectangulaire, l'espace de mise en place (94) est recouvert d'une plaque de couverture (98) agencée parallèlement à la plaque (55), et la plaque de couverture (98) est fixée au niveau des premiers étais longitudinaux (70).

2. Sellette d'attelage selon la revendication 1, **caractérisée en ce que** les premiers étais longitudinaux (79) sont munis d'alésages (96), et la plaque de couverture (98) est vissée dans les alésages.

3. Sellette d'attelage selon la revendication 1 ou 2, **caractérisée en ce que** les supports de palier (20) sont constitués d'alliage d'aluminium.

4. Sellette d'attelage selon l'une quelconque des revendications 1 à 3, **caractérisée en ce que** l'alliage d'aluminium est choisi parmi le groupe formé par AlCu4TiMg ou AlCu4Ti ou AlSi7Mg0,6.

5. Sellette d'attelage selon l'une quelconque des revendications 1 à 4, **caractérisée en ce qu'**elle est fabriquée grâce à un procédé de forgeage de coulée.

6. Sellette d'attelage selon la revendication 5, **caractérisée en ce que** le procédé de forgeage de coulée est un procédé de forgeage liquide.

7. Sellette d'attelage selon l'une quelconque des revendications précédentes, **caractérisée en ce qu'**elle est coulée directement à partir de l'alliage d'aluminium.

8. Sellette d'attelage selon l'une quelconque ou plusieurs des revendications 1 à 7, **caractérisée en ce que** la plaque d'attelage (12) est en outre fabriquée grâce à un durcissement à chaud.

9. Sellette d'attelage selon la revendication 5 ou 6, **caractérisée en ce que** la plaque d'attelage (12) est conçue de sorte qu'elle présente des obliquités qui répartissent une pression apparaissant lors du procédé de fabrication, de sorte que le nombre d'inclusions d'air soit minimal.

10. Sellette d'attelage selon l'une quelconque ou plusieurs des revendications 1 à 9, **caractérisée en ce que** les étais (70 à 91) présentent essentiellement la même épaisseur de paroi.

11. Sellette d'attelage selon l'une quelconque ou plusieurs des revendications 1 à 10, **caractérisée en ce qu'**une bordure circulaire (62) sur la plaque (55) est en outre moulée au niveau de la face inférieure (68).

12. Sellette d'attelage selon la revendication 10 et 11, **caractérisée en ce que** la bordure (68) présente essentiellement la même épaisseur de paroi que les étais (70 à 91).

13. Sellette d'attelage selon l'une quelconque ou plusieurs des revendications 1 à 12, **caractérisée en ce que** l'espace de mise en place médian (94) reçoit des bras de verrouillage ainsi qu'un maître-cylindre pour l'actionnement des bras de verrouillage.

14. Sellette d'attelage selon l'une quelconque ou plusieurs des revendications 1 à 13, **caractérisée en ce que** la plaque (55) présente dans le secteur de l'espace de mise en place médian (94) un évidement (58) pour l'introduction d'un pivot central dans la sellette d'attelage (50).

15. Sellette d'attelage selon l'une quelconque ou plusieurs des revendications 1 à 14, **caractérisée en ce que** le premier étai transversal (72) est relié avec un deuxième étai transversal (74), qui est parallèle au premier étai transversal (74), par l'intermédiaire d'une pluralité de deuxièmes étais longitudinaux (73).

16. Sellette d'attelage selon l'une quelconque ou plusieurs des revendications 1 à 15, **caractérisée en ce que** des troisièmes étais transversaux (76) relient la bordure (68) avec les premiers étais longitudinaux (70), de sorte que des espaces de mise en place latéraux (92R, 92L) avec un plan horizontal essentiellement sous la forme d'un secteur circulaire apparaissent grâce aux troisièmes étais transversaux (76),à la bordure (68) et aux premiers étais longitudinaux (70).

17. Sellette d'attelage selon la revendication 16, **caractérisée en ce que** les espaces de mise en place latéraux (92R, 92L) reçoivent une pompe d'amorçage à main ou un raccordement pour une pompe électrique ou bien un bloc-valve en vue de la commande du déroulement temporel d'un mécanisme de fermeture et/ou d'un mécanisme d'ouverture de la sellette d'attelage.

18. Sellette d'attelage selon l'une quelconque ou plusieurs des revendications 15 à 17, **caractérisée en ce que** la plaque (55) se transforme au niveau de l'extrémité arrière de la plaque d'attelage (52) en deux cornes (59) qui incluent entre elles un sabot d'attelage (56), et des quatrièmes étais transversaux (78), qui mènent à la bordure (68) et sont agencés en dessous de la transition entre plaque (55) et cornes (59), partent des extrémités libres du deuxième étai transversal (74).

19. Sellette d'attelage selon l'une quelconque ou plusieurs des revendications 15 à 18, **caractérisée en ce que** la plaque (55) se transforme au niveau de l'extrémité arrière de la plaque d'attelage (52) en deux cornes qui incluent entre elles un sabot d'attelage (56), et des troisièmes étais longitudinaux (80), qui mènent à la bordure (68) et sont agencés de manière centrale en dessous des cornes (59), partent des extrémités libres du deuxième étai transversal (74).

20. Sellette d'attelage selon l'une quelconque ou plusieurs des revendications 1 à 19, **caractérisée en ce que** la plaque (55) de fixation des supports de palier (100) est munie d'alésages de fixation (60) qui sont agencés des deux côtés de-l'axe longitudinal (64), et les alésages de fixation (60) sont formés d'un étai annulaire intérieur (82), qui est relié à l'étai annulaire extérieur (86) par l'intermédiaire d'une pluralité d'étais radiaux (84).

21. Sellette d'attelage selon la revendication 20, **caractérisée en ce que** l'étai annulaire extérieur (86) est relié avec l'un des premiers étais longitudinaux (70) par l'intermédiaire de cinquièmes étais transversaux **(88)**.

22. Sellette d'attelage selon la revendication 21, **caractérisée en ce qu'**au moins un des cinquièmes étais transversaux (88) présente la même hauteur que les premiers étais longitudinaux (70) associés et aboutit dans un étai (89) en forme de segment circulaire de même hauteur, qui est formé sur un arc, devant indiquer l'axe longitudinal (64), de l'étai annulaire extérieur (86).

23. Sellette d'attelage selon l'une quelconque ou plusieurs des revendications 20 à 22, **caractérisée en ce qu'**un sixième étai transversal (90) mène de l'étai annulaire extérieur (82) à la bordure (68).

24. Sellette d'attelage selon la revendication 17 et l'une quelconque ou plusieurs des revendications 20 à 23, **caractérisée en ce qu'**un septième étai transversal (91) mène de l'étai annulaire extérieur (82) à l'extrémité libre du deuxième étai transversal (74).

25. Sellette d'attelage selon l'une quelconque ou plusieurs des revendications 1 à 24, **caractérisée en ce que** les supports de palier (100) sont vissés contre la plaque d'attelage (52) avec interposition d'un coussinet (108).

26. Sellette d'attelage selon la revendication 25, **caractérisée en ce que** le coussinet est constitué de POM (polyoxyméthylène).
